# EUROPEAN PATENT APPLICATION

(11) **EP 4 832 165 A1**
(43) Date of publication of application: **28.10.2026**
(21) Application number: 24928035.5
(22) Date of filing: 28.08.2024
(51) Int. Cl.: H01M 10/613

(54) **BATTERY, BATTERY PACK AND ELECTRICAL APPARATUS**

(30) Priority: 06.03.2024 CN 202410254844
(71) Applicant: Contemporary Amperex Technology Co., Limited, Ningde, Fujian 352100 (CN)
(72) Inventor: HE, Runyong, Ningde, Fujian 352100 (CN); CHEN, Xingdi, Ningde, Fujian 352100 (CN); ZHANG, Wenhui, Ningde, Fujian 352100 (CN)
(74) Representative: Straus, Alexander
(86) International application number: PCT/CN2024/115126
(87) International publication number: WO 2025/185104

(57) **Abstract**

disclosure belongs to the technical field of batteries. Provided in the embodiments of the present disclosure are a battery, a battery pack and an electric apparatus. The battery comprises a temperature adjustment container and battery cells. The temperature adjustment container has a temperature adjustment chamber, and an inlet and an outlet that are respectively communicated with the temperature adjustment chamber, a weakened area being formed on the chamber wall of the temperature adjustment chamber. The battery cells are arranged on one side or two opposite sides of the temperature adjustment container in a preset direction, the preset direction intersecting the surfaces having the largest areas of the battery cells. When thermal runaway of the battery cells occurs, the pressure bearing capacity of the weakened area is smaller than the pressure bearing capacity of other areas except the weakened area of the chamber wall of the temperature adjustment chamber, such that fluid in the temperature adjustment chamber can flow out from a position corresponding to the weakened area. When thermal runaway occurs, the pressure of the temperature adjustment chamber is increased to open the weakened area, so as to cool battery cells undergoing thermal runaway rapidly, thus inhibiting thermal runaway of battery packs.

## Description

### CROSS-REFERENCE TO RELATED APPLICATIONS

This disclosure is based on and claims the priority to Chinese Patent Application No. 202410254844.2, filed on March 6, 2024 and entitled "BATTERY, BATTERY PACK, AND ELECTRIC APPARATUS", which is incorporated into this disclosure by reference in its entirety.

### TECHNICAL FIELD

This disclosure relates to the field of battery technology, and in particular, to a battery, a battery pack, and an electric apparatus.

### BACKGROUND

New energy batteries are increasingly widely used in life and industries. For example, new energy vehicles equipped with batteries have been widely used, and batteries are also being increasingly applied in fields such as energy storage.

In the related art, during the thermal runaway process of a battery in a battery pack, it is necessary to suppress the thermal runaway of the battery pack as much as possible.

### SUMMARY

To solve the above technical problem, this disclosure provides a battery, a battery pack, and an electric apparatus to suppress thermal runaway of the battery pack.

This disclosure is implemented through the following technical solutions.

A first aspect of embodiments of this disclosure provides a battery, including:
a temperature regulation container, having a temperature regulation chamber, and an inlet and an outlet each in communication with the temperature regulation chamber, where a weakened region is formed on a chamber wall of the temperature regulation chamber; and
a battery cell, where the temperature regulation container is provided with the battery cell on one side or two opposite sides along a preset direction, the preset direction intersecting a largest-area surface of the battery cell; and in a case that thermal runaway occurs in the battery cell, a pressure bearing capacity of the weakened region is less than a pressure bearing capacity of a region of the chamber wall of the temperature regulation chamber other than the weakened region, allowing fluid in the temperature regulation chamber to flow out from a position corresponding to the weakened region.

In the embodiments of this disclosure, by increasing the pressure in the temperature regulation chamber to open the temperature regulation chamber at the position where the weakened region is located, the cooling fluid flowing out from the weakened region is closer to the large surface of the battery cell, allowing the fluid flowing out from the weakened region to sufficiently cool the large surface of the battery. This improves the cooling efficiency for the battery cell, enabling the thermal runaway battery to cool down more rapidly. The rapid cooling of the thermal runaway battery effectively suppresses the thermal runaway of the individual battery. Additionally, the heat generated by the thermal runaway battery that is rapidly cooled is carried away by the fluid, resulting in a rapid temperature drop. This helps reduce thermal propagation between adjacent batteries and suppress thermal runaway of the battery pack.

In an embodiment, the temperature regulation container includes a container body, where a container wall of the container body encloses the temperature regulation chamber; the weakened region, the outlet, and the inlet are all formed on the container wall of the container body; the container body is provided with the battery cell on one side or two opposite sides along the preset direction; and in a case that thermal runaway occurs in the battery cell, the pressure bearing capacity of the weakened region is less than a pressure bearing capacity of a region of the container wall other than the weakened region, allowing the fluid in the temperature regulation chamber to flow out from the position corresponding to the weakened region.

In the embodiments of this disclosure, the weakened region is formed on the container wall of the container body, and the weakened region is formed by weakening the container wall itself, which helps simplify the structure of the temperature regulation container. Since the weakened region is formed on the container wall and is itself a part of the container wall, the container wall as a whole is relatively flat. This, in a case that the weakened region is in contact with the battery cell, facilitates full contact between the outer surface of the weakened region and the battery cell for heat exchange, thereby effectively regulating the temperature of the battery cell.

In an embodiment, a thickness of the weakened region is less than a thickness of the region of the container wall other than the weakened region.

In the embodiments of this disclosure, by setting the thickness of the weakened region to be relatively small, the pressure bearing capacity of the weakened region is weakened, making the pressure bearing capacity of the weakened region less than the pressure bearing capacity of a region of the container wall other than the weakened region.

In an embodiment, the container wall of the container body has elasticity, and the container body is capable of expanding and contracting under the action of the fluid in the temperature regulation chamber.

In the embodiments of this disclosure, since the container wall of the container body has certain elasticity, adjusting the pressure of the fluid in the temperature regulation chamber can apply a certain extrusion force to the large surface of the battery cell as needed, enabling the large surface of the battery cell to better maintain the required stress. The elastic container body can expand and contract, and the degree of expansion and contraction of the container body can be changed by adjusting the pressure of the fluid in the temperature regulation chamber, allowing the expansion space of the battery cell to be adjusted as needed.

In an embodiment, the container body is an air bag.

In the embodiments of this disclosure, the air bag has certain elasticity, and using the air bag as the container body can better implement adjustment of the extrusion force on the large surface of the battery cell and the degree of expansion and contraction of the battery cell by adjusting the fluid pressure in the temperature regulation chamber.

In an embodiment, a material of the container wall of the container body is rubber.

In the embodiments of this disclosure, the container wall made of rubber material has good elasticity and can provide a relatively uniformly expected extrusion force to the large surface of the battery cell. Rubber can withstand certain temperatures, and the container wall made of rubber material is hardly damaged due to overheating in the heat generation process of the battery cell during normal operation. In the early stage of thermal runaway of the battery cell, the temperature is not too high, and the container wall made of rubber material may not yet be damaged. By increasing the pressure of the fluid in the temperature regulation chamber, the fluid in the temperature regulation chamber flows out from the weakened region to rapidly cool the battery cell and prevent thermal propagation.

In an embodiment, the preset direction is perpendicular to the largest-area surface of the battery cell; and projected along the preset direction, an overlapping region between a projection region of a bare cell of the battery cell and a projection region of the elastic container wall is a target region, and a ratio of an area of the target region to an area of the projection region of the bare cell in the battery cell is greater than or equal to 50% and less than or equal to 100%.

In the embodiments of this disclosure, the elastic container wall of the container body can cover a large area of the bare cell, which facilitates application of the required extrusion force to the bare cell of the battery cell by adjusting the pressure of the fluid in the temperature regulation chamber.

In an embodiment, the temperature regulation container is provided with the weakened region on one side facing the corresponding battery cell along an arrangement direction of the temperature regulation container and the corresponding battery cell.

In the embodiments of this disclosure, the temperature regulation container is provided with the battery cell on one side or two opposite sides along the preset direction, and the weakened region is provided on a side of the temperature regulation container facing the battery cell, so that the weakened region of the temperature regulation container roughly faces the large surface of the battery cell. This, in the case of thermal runaway in the battery cell, facilitates full contact between the cooling fluid flowing out from the weakened region of the temperature regulation container and the large surface of the battery cell, thereby rapidly cooling the battery cell and preventing thermal propagation.

In an embodiment, the inlet and the outlet are both located at a same end of the temperature regulation chamber, and the battery further includes:
a first baffle located in the temperature regulation chamber, where the first baffle is connected to a chamber wall of the temperature regulation chamber on a side facing the inlet, the first baffle is spaced apart from a chamber wall of the temperature regulation chamber on a side facing away from the inlet, the first baffle is provided in plurality, and the plurality of first baffles are located between the outlet and the inlet along an arrangement direction of the outlet and the inlet; and
a second baffle located in the temperature regulation chamber, where the second baffle is spaced apart from the chamber wall of the temperature regulation chamber on the side facing the inlet, the second baffle is connected to the chamber wall of the temperature regulation chamber on the side facing away from the inlet, and the second baffle is located between a first baffle closest to the outlet and a first baffle closest to the inlet.

In the embodiments of this disclosure, under the guidance of the first baffle and the second baffle, the fluid for temperature regulation in the temperature regulation chamber flows back and forth between an end of the container body opposite the target end and the target end, and gradually flows toward the outlet. This increases the length of the flow path of the fluid in the temperature regulation chamber, and facilitates sufficient heat exchange between the fluid in the temperature regulation chamber and the large surface of the battery cell, enabling the temperature regulation container to effectively regulate the temperature of the battery cell during normal operation.

In an embodiment, the battery further includes a thermally decomposable solid substance located in the temperature regulation chamber, where the thermally decomposable solid substance decomposes to produce gas at a temperature of higher than 100°C.

In the embodiments of this disclosure, in the case of thermal runaway, the thermally decomposable solid substance is heated and decomposes to produce gas, so that the weakened region of the temperature regulation container in the thermal runaway battery is opened under the action of the gas produced by the thermal decomposition of the thermally decomposable solid substance, thereby realizing precise cooling for the thermal runaway battery.

In an embodiment, the battery cell is a pouch battery cell.

In the embodiments of this disclosure, during the thermal runaway process of a pouch battery cell, the thermal runaway gas is ejected in all directions, causing damage around the plastic sealing film as the outer packaging of the pouch battery cell. This facilitates flow of the cooling fluid, which has flowed out from the weakened region, through the damaged outer packaging toward the bare cell experiencing thermal runaway, thereby rapidly cooling the thermal runaway battery cell.

In an embodiment, the battery further includes a housing and a conductive terminal mounted on the housing, where the battery cell and the temperature regulation container are both located within the housing, and the conductive terminal is electrically connected to an electrode tab of the battery cell.

In the embodiments of this disclosure, the battery cell and the temperature regulation container are constrained within the housing, which facilitates close contact between the temperature regulation container and the corresponding battery cell, and improves the heat exchange efficiency, thereby effectively regulating the temperature of the battery cell.

In an embodiment, the inlet and the outlet are both located at an end of the housing facing away from the conductive terminal.

In the embodiments of this disclosure, the space at two ends of the housing is fully utilized to arrange the conductive terminal as well as the inlet and the outlet, and the end of the housing facing away from the inlet and the outlet has sufficient space for arranging the conductive terminal.

In an embodiment, the housing has an accommodation chamber and a pressure relief vent in communication with the accommodation chamber, where at least one battery cell is provided within the accommodation chamber, and the pressure relief vent and the conductive terminal are located on different sides of the housing.

In this embodiment, in the case of thermal runaway of a battery cell in the housing of the battery, the thermal runaway gas is ejected from the pressure relief vent to relieve pressure from the accommodation chamber in the housing, realizing directional ejection of the thermal runaway gas. Since the conductive terminal and the pressure relief vent are located on different sides of the housing, in a case that a plurality of batteries are arranged in sequence and the conductive terminals of the plurality of batteries are oriented consistently, the thermal runaway gas ejected from the pressure relief vent and the substances carried by the thermal runaway gas can avoid the conductive terminal as much as possible. This reduces the possibility of short circuit between the conductive terminals of adjacent batteries, and reduces the possibility of thermal runaway propagation, thereby helping reduce the severity of thermal runaway in the battery.

In an embodiment, the conductive terminal includes a sampling electrode and at least two adapter electrodes, where one of the adapter electrodes is electrically connected to an electrode tab of one battery cell, and another adapter electrode is electrically connected to an electrode tab of another battery cell; the electrode tabs corresponding to the two adapter electrodes have opposite polarities; and the sampling electrode is electrically connected to respective electrode tabs of the corresponding two battery cells, and the electrode tabs of the corresponding two battery cells electrically connected to the sampling electrode have opposite polarities.

In the embodiments of this disclosure, by connecting at least two battery cells within the housing in series through the sampling electrode, the two battery cells connected in series supply power externally through two adapter electrodes or the two battery cells connected in series are charged through the two adapter electrodes. The voltage of the corresponding battery cell can be measured through the sampling electrode and any one of the two adapter electrodes, thereby monitoring the working state of each battery cell in series in the battery.

In an embodiment, the housing includes a main shell and a top cover, where the pressure relief vent is formed on one side of the main shell, the top cover and the main shell enclose the accommodation chamber, the conductive terminal is mounted on the top cover, a material of the top cover is plastic, and a material of the main shell is metal or plastic; and the battery further includes a flame-retardant cover covering the pressure relief vent, where a material of the flame-retardant cover is mica, and a pressure bearing capacity of the housing is greater than a pressure bearing capacity of the flame-retardant cover.

In the embodiments of this disclosure, the selection of different materials for the top cover, the main shell, and the flame-retardant cover helps obtain the respective required pressure bearing capacities. The flame-retardant cover is configured to block thermal runaway gas from adjacent batteries from entering the accommodation chamber of the housing, helping suppress thermal runaway propagation.

A second aspect of embodiments of this disclosure provides a battery pack including:
a box; and
the battery according to any one of the foregoing embodiments, located in the box.

A second aspect of embodiments of this disclosure provides an electric apparatus including:
an apparatus body; and
the battery pack according to any one of the above embodiments, mounted on the apparatus body, where the battery pack is configured to supply power to the apparatus body.

### Effects of the invention:

In the embodiments of this disclosure, in a case that the battery cell in the battery works normally, fluid for regulating temperature can be introduced into the temperature regulation chamber of the temperature regulation container through the inlet to regulate the temperature of the normally working battery cell. The temperature regulation container is provided with the battery cell on one side or two opposite sides along the preset direction, that is, the temperature regulation container is located on the large surface of the battery cell, allowing for a large contact surface between the temperature regulation container and the battery cell. This facilitates heat exchange between the temperature regulation container and the battery cell, thereby effectively regulating the temperature of the battery cell. In a case that the battery cell in the battery experiences thermal runaway, pressure of the fluid in the temperature regulation chamber is increased. Since the pressure bearing capacity of the weakened region is less than the pressure bearing capacity of a region of the chamber wall of the temperature regulation chamber other than the weakened region, the temperature regulation container is opened at the weakened region, and the cooling fluid in the temperature regulation chamber flows out from the position where the ruptured weakened region is located. Since the temperature regulation container is provided with the battery cell on one side or two opposite sides along the preset direction, the cooling fluid flowing out from the weakened region is closer to the large surface of the battery cell, allowing the fluid flowing out from the weakened region to sufficiently cool the large surface of the battery. This improves the cooling efficiency for the battery cell, enabling the thermal runaway battery to cool down rapidly. The rapid cooling of the thermal runaway battery effectively suppresses the thermal runaway of the individual battery. Additionally, the heat generated by the thermal runaway battery that is rapidly cooled is carried away by the fluid, resulting in a rapid temperature drop. This helps reduce thermal propagation between adjacent batteries and suppress thermal runaway of the battery pack.

### BRIEF DESCRIPTION OF DRAWINGS

Persons of ordinary skill in the art will be clear about various other advantages and benefits by reading the detailed description of the preferred embodiments below. The accompanying drawings are merely intended to illustrate the preferred embodiments and are not intended to limit this disclosure. Moreover, throughout the accompanying drawings, the same reference signs represent the same parts. In the accompanying drawings:
FIG. 1 is a schematic exploded view of a temperature regulation container of a battery and battery cells on two sides according to an embodiment of this disclosure, where one battery cell is provided on each side in the figure;
FIG. 2 is an arrangement diagram of a temperature regulation container and a first baffle and a second baffle in a temperature regulation chamber according to an embodiment of this disclosure;
FIG. 3 is an enlarged view of position A in FIG. 2;
FIG. 4 is a schematic exploded view of a temperature regulation container of a battery and battery cells on two sides according to an embodiment of this disclosure, where two battery cells are provided on each side;
FIG. 5 is a schematic structural diagram of a battery according to an embodiment of this disclosure, where battery cells and a temperature regulation container are located in a housing, and through holes of a flame-retardant cover are shown in the figure;
FIG. 6 is a schematic structural diagram of a battery according to an embodiment of this disclosure, where conductive terminals are shown in the figure;
FIG. 7 is a schematic exploded view of a battery according to an embodiment of this disclosure;
FIG. 8 is an assembly diagram of a top cover and a main shell according to an embodiment of this disclosure; and
FIG. 9 is an arrangement diagram of multiple batteries in a battery module according to an embodiment of this disclosure.

Reference signs:
100. battery; 11. temperature regulation chamber; 12. inlet; 13. outlet; 14. container body; 141. container wall; 142. weakened region; 2. battery cell; 21. electrode tab; 22. large surface; 23. bare cell; 31. first baffle; 32. second baffle; 4. thermally decomposable solid substance; 5. housing; 51. accommodation chamber; 52. pressure relief vent; 53. main shell; 54. top cover; 541. flange; 6. conductive terminal; 61. sampling electrode; 62. adapter electrode; 7. flame-retardant cover; and 71. through hole.

### DESCRIPTION OF EMBODIMENTS

The embodiments of the technical solutions of this disclosure are described in detail below with reference to the accompanying drawings. The following embodiments are only used to illustrate the technical solutions of this disclosure more clearly, and thus are only used as examples but cannot be used to limit the protection scope of this disclosure.

Unless otherwise defined, all technical and scientific terms used herein shall have the same meanings as commonly understood by persons of ordinary skill in the technical field to which this disclosure belongs. The terms used herein are intended to merely describe the specific embodiments rather than to limit this disclosure. The terms "comprise", "have", and any variations thereof in the embodiments of this disclosure are intended to cover non-exclusive inclusions.

In the description of the embodiments of this disclosure, technical terms such as "first", "second", and "third" are intended to distinguish between different objects other than to indicate or imply relative importance or implicitly indicate the quantity, particular order, or primary/secondary relationship of the indicated technical features. In the description of the embodiments of this disclosure, "multiple" means two or more, unless otherwise clearly and specifically specified.

Reference to "embodiment" herein means that specific features, structures, or characteristics described with reference to the embodiment may be included in at least one embodiment of this application. The phrase "embodiment" appearing in various places in this specification does not necessarily refer to the same embodiment or an independent or alternative embodiment that is exclusive of other embodiments. Persons of ordinary skill in the art explicitly and implicitly understand that the embodiments described herein can be combined with other embodiments.

In the description of the embodiments of this disclosure, the term "and/or" is only an associative relationship for describing associated objects, indicating that three relationships may be present. For example, A and/or B may indicate the following three cases: presence of only A; presence of both A and B; and presence of only B. In addition, the character "/" herein generally indicates an "or" relationship between the contextually associated objects.

In the description of the embodiments of this disclosure, it should be noted that unless otherwise specified and defined explicitly, the technical terms "mount", "connect", "join", and "attach" should be understood in their general senses. For example, they may refer to a fixed connection, a detachable connection, or an integral connection; may refer to a direct connection or an indirect connection via an intermediate medium; or may refer to an internal communication between two elements or an interactive relationship between two elements. Persons of ordinary skill in the art can understand specific meanings of these terms in the embodiments of this disclosure as appropriate to specific situations.

In the description of the embodiments of this disclosure, unless otherwise clearly specified and defined, the technical term "contact" should be understood in a broad sense, which may be direct contact or contact through an intermediate medium layer; or may be contact between two objects in contact with substantially no interaction force, or contact between two objects in contact with interaction force.

In the related art, multiple battery cells in a battery pack are typically arranged along a preset direction, the preset direction intersecting a largest-area surface of a battery cell. In the following description, the largest-area surface of a battery cell is referred to as a large surface. An apparatus for cooling does not extend to a side of the large surface of the battery cell. In a case that a battery cell of a battery in a battery pack experiences thermal runaway, a fluid for cooling the battery pack typically cools the battery pack as a whole, and the cooling fluid has difficulty flowing to a largest-area surface of the battery cell to sufficiently cool the thermal runaway battery cell, resulting in low cooling efficiency. This is not beneficial for suppressing thermal runaway of the battery pack.

In the embodiments of this disclosure, battery cells are provided on one side or two opposite sides of a temperature regulation container along a preset direction, the preset direction intersecting a largest-area surface of the battery cells. The temperature regulation container is on a side of the large surface of the battery cell. In a case that a battery cell in a battery experiences thermal runaway, fluid pressure in the temperature regulation chamber is increased, causing a temperature regulation container to rapture at a weakened region. A cooling fluid in the temperature regulation chamber can then sufficiently flow to a large surface of the battery cell to sufficiently cool the large surface of the battery cell, reducing thermal propagation between adjacent batteries, which is beneficial for suppressing thermal runaway of a battery pack. The temperature regulation container on the side of the large surface of the battery cell can quickly cool the battery cell in the battery, which is beneficial for suppressing thermal runaway of the individual battery, thereby effectively suppressing thermal runaway of the battery pack as a whole.

The battery according to the embodiments of this disclosure may be used in, but not limited to, an electric apparatus such as an energy storage power system, a vehicle, a ship, or an aircraft.

The battery according to the embodiments of this disclosure may also be used in groups as a battery pack. The battery pack may also be used in, but not limited to, an electric apparatus such as an energy storage power system, a vehicle, a ship, or an aircraft. Using a battery pack can provide higher total energy.

The battery cell may be provided in plurality, and the plurality of battery cells may be connected in series, parallel, or series-parallel, where being connected in series-parallel means a plurality of battery cells are connected in both series and parallel. The plurality of battery cells may be directly connected in series, parallel, or series-parallel to form a battery pack. Certainly, the plurality of battery cells may alternatively be connected in series, parallel, or series-parallel first to form a battery module, and then a plurality of battery modules are connected in series, parallel, or series-parallel to form a battery pack. The battery pack may further include other structures. For example, the battery pack may further include a busbar component for implementing electrical connection between a plurality of battery cells.

A battery cell refers to a unit capable of realizing mutual conversion between chemical energy and electrical energy.

In the embodiments of this disclosure, the battery cell may be a secondary battery, where the secondary battery is a battery cell that can be charged after discharge to activate active materials for continuous use.

In the embodiments of this disclosure, the battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead-acid battery, or the like, which is not limited in the embodiments of this disclosure.

The embodiments of this disclosure provide an electric apparatus including the foregoing battery or battery pack for providing electrical energy. The electric apparatus may be, but is not limited to, a mobile phone, a tablet computer, a notebook computer, an electric toy, an electric tool, an electric bicycle, an electric vehicle, a ship, an aerospace vehicle, or the like. The electric toy may include a fixed or mobile electric toy, such as a game console, an electric toy vehicle, an electric toy ship, an electric toy aircraft, and the like. The aerospace vehicle may include an airplane, a rocket, a space shuttle, a spaceship, and the like.

The electric apparatus according to the embodiments of this disclosure includes an apparatus body and a battery pack, where the battery pack is mounted on the apparatus body to supply power to the apparatus body.

In the embodiments of this disclosure, power is supplied to the apparatus body through the battery pack, enabling the apparatus body to obtain the electrical energy required to maintain normal operation.

The battery 100 pack according to the embodiments of this disclosure includes a box and a battery 100, where the battery 100 is located in the box.

In the embodiments of this disclosure, the battery 100 is located in the box, and the box and the battery 100 in the box as a whole supply power externally. The box can effectively protect the battery 100 in the box.

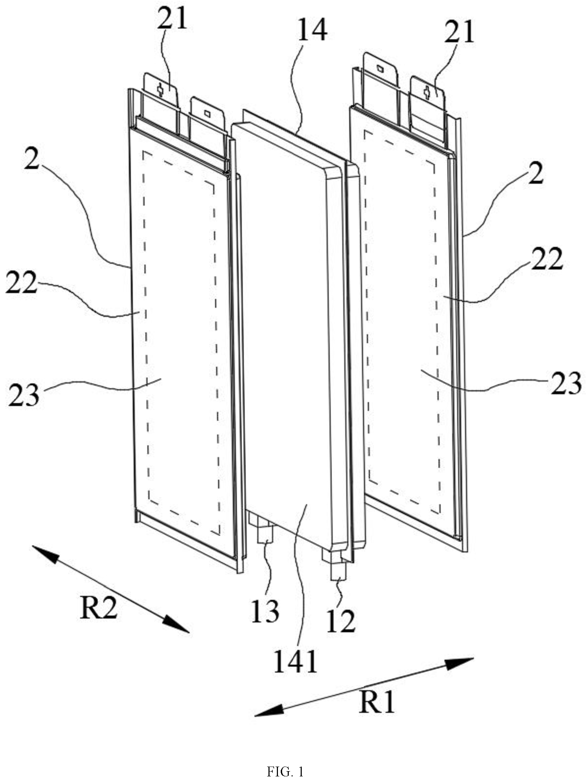

According to the battery 100 in the embodiments of this disclosure, as shown in FIG. 1 to FIG. 4, and FIG. 7, the battery 100 includes a temperature regulation container and a battery cell 2. The temperature regulation container has a temperature regulation chamber 11 and an inlet 12 and an outlet each in communication with the temperature regulation chamber 11, where a weakened region 142 is formed on a chamber wall of the temperature regulation chamber 11. The temperature regulation container is provided with the battery cell 2 on one side or two opposite sides along a preset direction, the preset direction intersecting a largest-area surface of the battery cell 2; and in a case that thermal runaway occurs in the battery cell 2, a pressure bearing capacity of the weakened region 142 is less than a pressure bearing capacity of a region of the chamber wall of the temperature regulation chamber 11 other than the weakened region 142, allowing fluid in the temperature regulation chamber 11 to flow out from a position corresponding to the weakened region 142.

The large surface 22 in the following description refers to the largest-area surface of the battery cell 2.

The temperature regulation container is configured to regulate temperature of the battery cell 2, that is, it can cool or heat the battery cell 2 as needed during the normal operation of the battery cell 2 to regulate the temperature of the battery cell 2, and can also cool the battery 100 in a case that thermal runaway occurs in the battery 100.

The inlet 12 and the outlet of the temperature regulation container are configured to be connected to an external fluid source, so that an external fluid for temperature regulation enters the temperature regulation container through the inlet 12 and flows out of the temperature regulation container through the outlet.

For example, the fluid flowing through the temperature regulation container via the inlet 12 and the outlet may be gas or liquid.

A relative magnitude of the pressure bearing capacity may be measured by introducing fluid. Specifically, fluid is injected into the temperature regulation chamber 11 of the temperature regulation container, and the pressure of the fluid in the temperature regulation chamber 11 is continuously increased. During the process of continuously increasing the pressure in the temperature regulation chamber 11, the weakened region 142 opens the temperature regulation chamber 11 prior to a region of the chamber wall of the temperature regulation chamber 11 other than the weakened region 142, that is, the pressure bearing capacity of the weakened region 142 is less than the pressure bearing capacity of a region of the chamber wall of the temperature regulation chamber 11 other than the weakened region 142.

For example, referring to FIG. 1, FIG. 4, and FIG. 7, the preset direction is perpendicular to the largest-area surface of the battery cell 2.

For example, referring to FIG. 1, FIG. 4, and FIG. 7, a direction indicated by arrow R1 in the figure is the preset direction.

In the embodiments of this disclosure, in a case that the battery cell 2 in the battery 100 works normally, fluid for regulating temperature can be introduced into the temperature regulation chamber 11 of the temperature regulation container through the inlet 12 to regulate the temperature of the normally working battery cell 2. The temperature regulation container is provided with the battery cell 2 on one side or two opposite sides along the preset direction, that is, the temperature regulation container is located on the large surface 22 of the battery cell 2, allowing for a large contact surface between the temperature regulation container and the battery cell 2. This facilitates heat exchange between the temperature regulation container and the battery cell 2, thereby effectively regulating the temperature of the battery cell 2. In a case that the battery cell 2 in the battery 100 experiences thermal runaway, pressure of the fluid in the temperature regulation chamber 11 is increased. Since the pressure bearing capacity of the weakened region 142 is less than the pressure bearing capacity of a region of the chamber wall of the temperature regulation chamber 11 other than the weakened region 142, the temperature regulation container is opened at the weakened region 142, and the cooling fluid in the temperature regulation chamber 11 flows out from the position where the ruptured weakened region 142 is located. Since the temperature regulation container is provided with the battery cell 2 on one side or two opposite sides along the preset direction, the cooling fluid flowing out from the weakened region 142 is closer to the large surface 22 of the battery cell 2, allowing the fluid flowing out from the weakened region 142 to sufficiently cool the large surface 22 of the battery 100, thereby improving the cooling efficiency for the battery cell 2, and enabling the thermal runaway battery 100 to cool down rapidly. The rapid cooling of the thermal runaway battery 100 effectively suppresses the thermal runaway of the individual battery 100. Additionally, the heat generated by the thermal runaway battery 100 that is rapidly cooled is carried away by the fluid, resulting in a rapid temperature drop. This helps reduce thermal propagation between adjacent batteries 100 and suppress thermal runaway of the battery 100 pack.

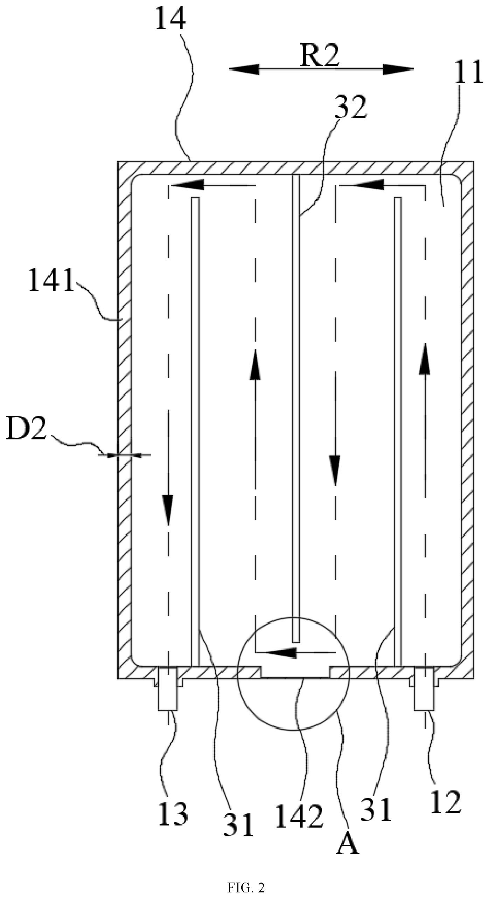

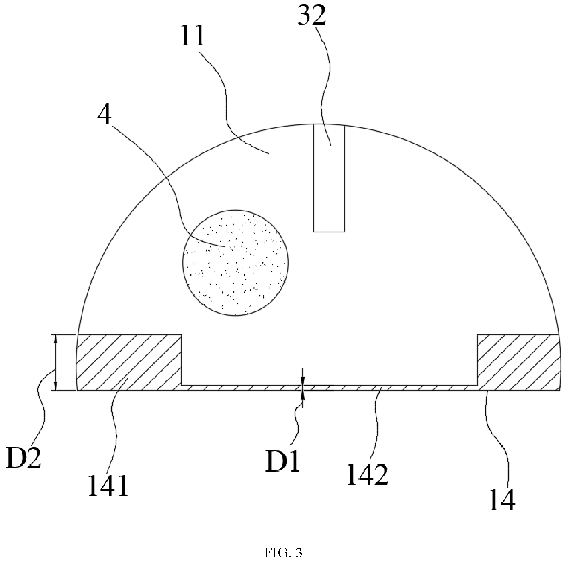

In an embodiment, referring to FIG. 2 and FIG. 3, the temperature regulation container includes a container body 14, where a container wall 141 of the container body 14 encloses the temperature regulation chamber 11; the weakened region 142, the outlet, and the inlet 12 are all formed on the container wall 141 of the container body 14; the container body 14 is provided with the battery cell 2 on one side or two opposite sides along the preset direction; and in a case that thermal runaway occurs in the battery cell 2, the pressure bearing capacity of the weakened region 142 is less than a pressure bearing capacity of a region of the container wall 141 other than the weakened region 142, allowing the fluid in the temperature regulation chamber 11 to flow out from the position corresponding to the weakened region 142.

The container wall 141 of the container body 14 encloses the temperature regulation chamber 11, with the chamber wall of the temperature regulation chamber 11 being substantially the container wall 141 of the container body 14. In a case that the battery cell 2 works normally, the fluid for temperature regulation flows into the temperature regulation chamber 11 from the inlet 12, and the fluid of the temperature regulation chamber 11 flows out from the outlet.

The relative magnitude of the pressure bearing capacity may be measured by introducing fluid. Specifically, fluid is injected into the temperature regulation chamber 11, and the pressure of the fluid in the temperature regulation chamber 11 is continuously increased. During the process of continuously increasing the pressure in the temperature regulation chamber 11, the weakened region 142 is damaged prior to a region of the container wall 141 of the container body 14 other than the weakened region 142 to open the temperature regulation chamber 11, that is, the pressure bearing capacity of the weakened region 142 is less than the pressure bearing capacity of a region of the container wall 141 other than the weakened region 142.

For example, referring to FIG. 1 to FIG. 4, the container body 14 shown in the figure is the temperature regulation container of the embodiment shown in the figure, and the container wall 141 shown in the figure is the chamber wall of the temperature regulation chamber 11 of the embodiment shown in the figure.

In the embodiments of this disclosure, the weakened region 142 is formed on the container wall 141 of the container body 14, and the weakened region 142 is formed by weakening the container wall 141 itself, which helps simplify the structure of the temperature regulation container. Since the weakened region 142 is formed on the container wall 141 and is itself a part of the container wall 141, the container wall 141 as a whole is relatively flat. This, in a case that the weakened region 142 is in contact with the battery cell 2, facilitates full contact between the outer surface of the weakened region 142 and the battery cell 2 for heat exchange, thereby effectively regulating the temperature of the battery cell 2.

It can be understood that an arrangement manner of the weakened region 142 in the embodiments of this disclosure is not limited.

For example, the temperature regulation container further includes a one-way valve provided on the container body 14, where the one-way valve and the container wall 141 of the container body 14 enclose the temperature regulation chamber 11, and the weakened region 142 is formed on the one-way valve.

It should be noted that the one-way valve and the container wall 141 enclose the temperature regulation chamber 11, the chamber wall of the temperature regulation chamber 11 includes not only the container wall 141 of the container body 14 but also the chamber wall constituted by the one-way valve, that is, a part of the structure on the one-way valve also belongs to a part of the chamber wall of the temperature regulation chamber 11. The weakened region 142 on the chamber wall of the temperature regulation chamber 11 can be formed by setting a relatively small opening pressure of the one-way valve.

The relative magnitude of the pressure bearing capacity may be measured by introducing fluid. Specifically, fluid is introduced into the temperature regulation chamber 11 to increase the pressure of the fluid in the temperature regulation chamber 11, the one-way valve opens under the action of the fluid pressure in the temperature regulation chamber 11 and the container wall 141 of the container body 14 is not damaged, that is, the pressure bearing capacity of the weakened region 142 is less than the pressure bearing capacity of a region of the chamber wall of the temperature regulation chamber 11 other than the weakened region 142.

For example, in a case that thermal runaway occurs in the battery cell 2, the fluid pressure in the temperature regulation chamber 11 is increased to open the one-way valve under the action of the fluid pressure in the temperature regulation chamber 11, thereby enabling the fluid for cooling in the temperature regulation chamber 11 to flow out from the weakened region 142 of the one-way valve.

In an embodiment, referring to FIG. 2 and FIG. 3, a thickness of the weakened region 142 is less than a thickness of the region of the container wall 141 other than the weakened region 142.

For example, a material of the weakened region 142 and a material of a region of the chamber wall of the temperature regulation chamber 11 other than the weakened region 142 may be the same or different.

For example, referring to FIG. 2 and FIG. 3, a thickness of the weakened region 142 is D1, and a thickness of a region of the container wall 141 other than the weakened region 142 is D2, where D1 < D2.

In the embodiments of this disclosure, by setting the thickness of the weakened region 142 to be relatively small, the pressure bearing capacity of the weakened region 142 is weakened, making the pressure bearing capacity of the weakened region 142 less than the pressure bearing capacity of a region of the container wall 141 other than the weakened region 142.

In an embodiment, referring to FIG. 1 to FIG. 4, the container wall 141 of the container body 14 has elasticity, and the container body 14 is capable of expanding and contracting under the action of the fluid in the temperature regulation chamber 11.

In the embodiments of this disclosure, since the container wall 141 of the container body 14 has certain elasticity, adjusting the pressure of the fluid in the temperature regulation chamber 11 can apply a certain extrusion force to the large surface 22 of the battery cell 2 as needed, enabling the large surface 22 of the battery cell 2 to better maintain the required stress. The elastic container body 14 can expand and contract, and the degree of expansion and contraction of the container body 14 can be changed by adjusting the pressure of the fluid in the temperature regulation chamber 11, allowing the expansion space of the battery cell 2 to be adjusted as needed.

In an embodiment, referring to FIG. 1 to FIG. 4, the container body 14 can be an air bag.

In the embodiments of this disclosure, the air bag has certain elasticity, and using the air bag as the container body 14 can better implement adjustment of the extrusion force on the large surface 22 of the battery cell 2 and the degree of expansion and contraction of the battery cell 2 by adjusting the fluid pressure in the temperature regulation chamber 11.

In an embodiment, referring to FIG. 1 to FIG. 4, a material of the container wall 141 of the container body 14 is rubber.

In the embodiments of this disclosure, the container wall 141 made of rubber material has good elasticity and can provide a relatively uniformly expected extrusion force to the large surface 22 of the battery cell 2. Rubber can withstand certain temperatures, and the container wall 141 made of rubber material is hardly damaged due to overheating in the heat generation process of the battery cell 2 during normal operation. In the early stage of thermal runaway of the battery cell 2, the temperature is not too high, and the container wall 141 made of rubber material may not yet be damaged. By increasing the pressure of the fluid in the temperature regulation chamber 11, the fluid in the temperature regulation chamber 11 flows out from the weakened region 142 to rapidly cool the battery cell 2 and prevent thermal propagation.

It can be understood that the material of the elastic container wall 141 is not limited to rubber. For example, the material of the container wall 141 of the container body 14 is silicone.

It can be understood that the container wall 141 of the container body 14 is not limited to elastic materials. For example, the material of the container body 14 may be a rigid material. For example, the material of the container wall 141 of the container body 14 may be hard plastic or other metal materials.

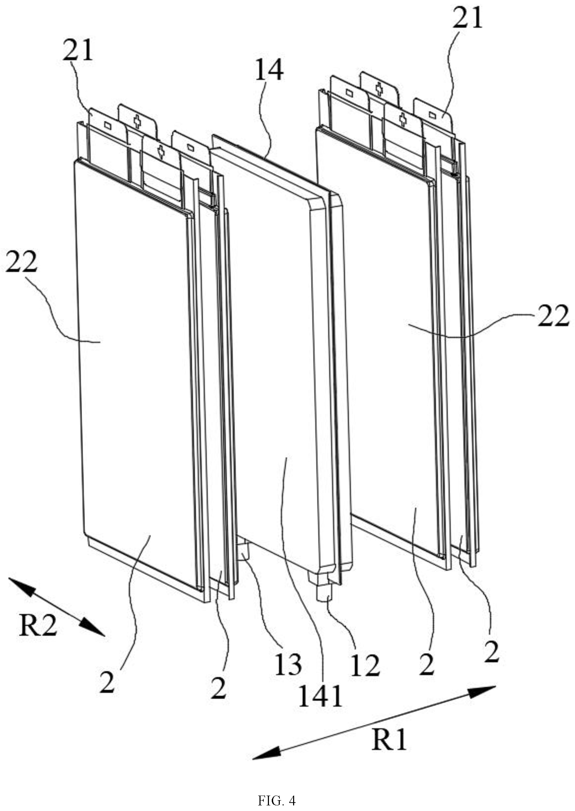

In an embodiment, referring to FIG. 1 and FIG. 4, the temperature regulation container is provided with the weakened region 142 on one side facing the corresponding battery cell 2 along an arrangement direction of the temperature regulation container and the corresponding battery cell 2.

Since the temperature regulation container is provided with the battery cell 2 on one side or two opposite sides along the preset direction, the arrangement direction of the temperature regulation container and the corresponding battery cell 2 is the preset direction.

In the embodiments of this disclosure, the temperature regulation container is provided with the battery cell 2 on one side or two opposite sides along the preset direction, and the weakened region 142 is provided on a side of the temperature regulation container roughly faces the battery cell 2, so that the weakened region 142 of the temperature regulation container is generally directed toward the large surface 22 of the battery cell 2. This, in the case of thermal runaway in the battery cell 2, facilitates full contact between the cooling fluid flowing out from the weakened region 142 of the temperature regulation container and the large surface 22 of the battery cell 2, thereby rapidly cooling the battery cell 2 and preventing thermal propagation.

It can be understood that the position of the weakened region 142 is not limited. For example, the inlet 12 and the outlet are located at a same end of the temperature regulation chamber 11, the weakened region 142 is located at an end of the temperature regulation chamber 11 facing the inlet 12, the weakened region 142 is located between the inlet 12 and the outlet along the arrangement direction of the inlet 12 and the outlet, and the weakened region 142 may not face the large surface 22 of the battery cell 2.

For example, referring to FIG. 1, FIG. 4, and FIG. 7, a direction indicated by arrow R2 in the figure is the arrangement direction of the inlet 12 and the outlet.

In an embodiment, referring to FIG. 1, the preset direction is perpendicular to the largest-area surface of the battery cell 2; and projected along the preset direction, an overlapping region between a projection region of a bare cell 23 of the battery cell 2 and a projection region of the elastic container wall 141 is a target region, and a ratio of an area of the target region to an area of the projection region of the bare cell 23 in the battery cell 2 is greater than or equal to 50% and less than or equal to 100%.

The battery cell 2 includes a bare cell 23 and a corresponding outer packaging, and the bare cell 23 is located in the corresponding outer packaging. The bare cell 23 includes a positive electrode plate, a negative electrode plate, and a separator located between the positive electrode plate and the negative electrode plate. The largest-area surface of the battery cell 2 is a largest-area surface of the outer packaging of the battery cell 2.

For example, the bare cell 23 may be a wound cell or a stacked cell.

The arrangement direction of the large surface 22 of the bare cell 23 is substantially consistent with the arrangement direction of the large surface 22 of the battery cell 2, and the preset direction is perpendicular to the largest-area surface of the battery cell 2, that is, the preset direction is substantially perpendicular to the largest-area surface of the bare cell 23.

The projection region of the bare cell 23 along the preset direction is roughly a region projected by the largest-area surface in the bare cell 23.

Through the distribution of the projection region of the container wall 141 along the preset direction, the extent to which the container wall 141 covers the largest-area surface of the bare cell 23 can be substantially determined.

For example, referring to FIG. 1, the projection region of the bare cell 23 along the preset direction can be located within the projection region of the container wall 141 along the preset direction, and the ratio of the area of the target region to the area of the projection region of the bare cell 23 in the battery cell 2 may be 100%.

For example, the ratio of the area of the target region to the area of the projection region of the bare cell 23 in the battery cell 2 is 50%, 60%, 70%, 80%, 90%, or 100%.

For example, referring to FIG. 1, FIG. 2, and FIG. 4, the container body 14 is roughly square in shape.

The bare cell 23 is removed from the battery cell 2, and the area of the projection region of the bare cell 23 along the preset direction can be obtained by measuring the length and width of the largest-area surface of the bare cell 23. The bare cell 23 in the battery cell 2 is welded to the terminal post with a weld mark, and the position of the bare cell 23 relative to the outer packaging can be determined through the weld mark. The temperature regulation container located on one side of the battery cell 2 along the preset direction is located outside the outer packaging of the battery cell 2, and the position of the temperature regulation container relative to the outer packaging of the battery cell 2 can be clarified. The position of the bare cell 23 relative to the outer packaging of the battery cell 2 and the position of the temperature regulation container relative to the outer packaging of the battery cell 2 can be clarified, thereby enabling determination of the overlapping target region, and the area of the target region can be obtained by measuring the length and width dimensions of the target region.

For example, referring to FIG. 1, the region corresponding to the dashed line in the figure is roughly the region corresponding to the position where the bare cell 23 is located.

In the embodiments of this disclosure, the elastic container wall 141 of the container body 14 can cover a large area of the bare cell 23, which facilitates application of the required extrusion force to the bare cell 23 of the battery cell 2 by adjusting the pressure of the fluid in the temperature regulation chamber 11.

In an embodiment, the battery cell 2 may be a pouch battery cell.

It can be understood that the outer packaging covering the outside of the bare cell 23 of the pouch battery cell is a plastic sealing film.

For example, the plastic sealing film is an aluminum-plastic film.

In the embodiments of this disclosure, during the thermal runaway process of a pouch battery cell, the thermal runaway gas is ejected in all directions, causing damage around the plastic sealing film as the outer packaging of the pouch battery cell. This facilitates flow of the cooling fluid, which has flowed out from the weakened region 142, through the damaged outer packaging toward the bare cell 23 experiencing thermal runaway, thereby rapidly cooling the thermal runaway battery cell 2.

It can be understood that the battery cell 2 is not limited to a pouch battery cell. For example, the battery cell 2 may be a hard-shell battery cell. For example, the battery cell 2 may be a prismatic hard-shell battery cell.

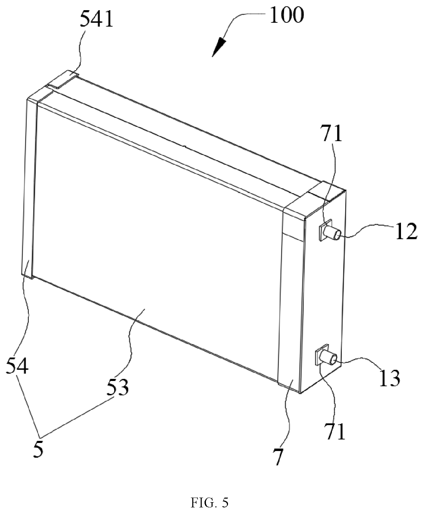

In an embodiment, referring to FIG. 5 to FIG. 8, the battery 100 further includes a housing 5 and a conductive terminal 6 mounted on the housing 5, where the battery cell 2 and the temperature regulation container are both located within the housing 5, and the conductive terminal 6 is electrically connected to an electrode tab 21 of the battery cell 2.

For example, the housing 5 is a hard shell.

In the embodiments of this disclosure, the battery cell 2 and the temperature regulation container are constrained within the housing 5, which facilitates close contact between the temperature regulation container and the corresponding battery cell 2, and improves the heat exchange efficiency, thereby effectively regulating the temperature of the battery cell 2.

It can be understood that in a case that the container wall 141 of the container body 14 has elasticity, the battery cell 2 and the temperature regulation container are constrained within the housing 5, so that the housing 5 can provide support reaction force for the battery cell 2 and/or the temperature regulation container, allowing the temperature regulation container to apply the required extrusion force to the corresponding battery cell 2.

In an embodiment, referring to FIG. 5 to FIG. 8, the inlet 12 and the outlet are both located at an end of the housing 5 facing away from the conductive terminal 6.

The conductive terminal 6 is located at one end of the housing 5, and the inlet 12 and the outlet are both located at the other end of the housing 5.

In the embodiments of this disclosure, the space at two ends of the housing 5 is fully utilized to arrange the conductive terminal 6 as well as the inlet 12 and the outlet, and the end of the housing 5 facing away from the inlet 12 and the outlet has sufficient space for arranging the conductive terminal 6.

It can be understood that the relative positions of the inlet 12, the outlet, and the conductive terminal 6 are not limited. For example, the inlet 12, the outlet, and the conductive terminal 6 may be located at a same end of the housing 5.

In an embodiment, referring to FIG. 5 to FIG. 8, the housing 5 has an accommodation chamber 51 and a pressure relief vent 52 in communication with the accommodation chamber 51, where at least one battery cell 2 is provided within the accommodation chamber 51, and the pressure relief vent 52 and the conductive terminal 6 are located on different sides of the housing 5.

The pressure relief vent 52 is configured to discharge gas generated by thermal runaway of the battery cell 2 in the accommodation chamber 51, so as to relieve pressure from the accommodation chamber 51.

The thermal runaway gas in the accommodation chamber 51 relieves pressure from the pressure relief vent 52, and all parts of the housing 5 except the pressure relief vent 52 can be fully sealed or not fully sealed. In a case that it is not fully sealed, as long as the resistance for the thermal runaway gas to escape from a part of the housing 5 other than the pressure relief vent 52 is sufficiently large, it can guide the thermal runaway gas to be ejected from the pressure relief vent 52 as much as possible.

It can be understood that for a plurality of batteries 100 arranged in sequence in a battery module in the battery 100 pack, the orientation of the conductive terminals 6 is substantially consistent. That is, for a plurality of batteries 100 arranged in sequence in the battery module, an ejection direction of the pressure relief vent 52 of each battery 100 substantially avoids the conductive terminal 6.

For example, referring to FIG. 5 to FIG. 8, the pressure relief vent 52 is located on one side of the housing 5, and the conductive terminal 6 is located on the other side of the housing 5 opposite the pressure relief vent 52.

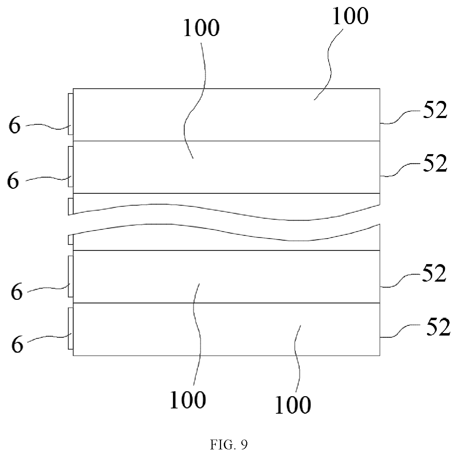

For example, referring to FIG. 9, a plurality of batteries 100 arranged in sequence constitute a battery module, and the orientations of the conductive terminals 6 of the plurality of batteries 100 in the battery module are consistent.

In the embodiments of this disclosure, in the case of thermal runaway of a battery cell 2 in the housing 5 of the battery 100, the thermal runaway gas is ejected from the pressure relief vent 52 to relieve pressure from the accommodation chamber 51 in the housing 5, realizing directional ejection of the thermal runaway gas. Since the conductive terminal 6 and the pressure relief vent 52 are located on different sides of the housing 5, in a case that a plurality of batteries 100 are arranged in sequence and the conductive terminals 6 of the plurality of batteries 100 are oriented consistently, the thermal runaway gas ejected from the pressure relief vent 52 and the substances carried by the thermal runaway gas can avoid the conductive terminal 6 as much as possible. This reduces the possibility of short circuit between the conductive terminals 6 of adjacent batteries 100, and reduces the possibility of thermal runaway propagation, thereby helping reduce the severity of thermal runaway in the battery 100.

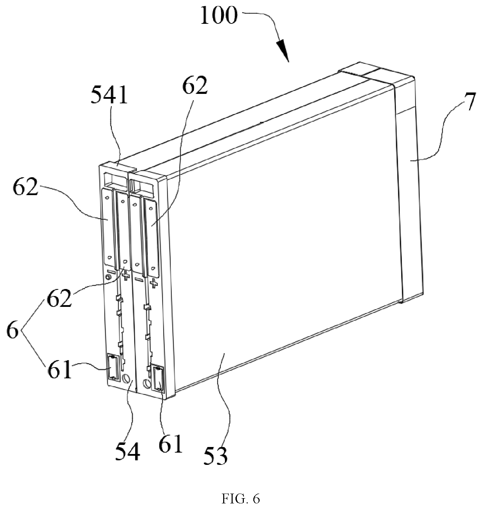

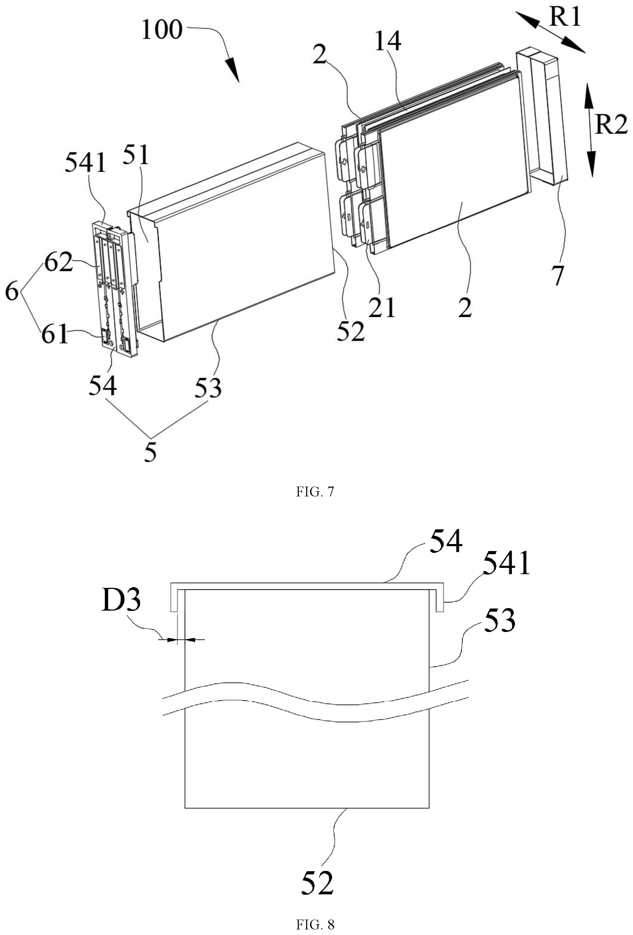

In an embodiment, referring to FIG. 6 and FIG. 7, the conductive terminal 6 includes a sampling electrode 61 and at least two adapter electrodes 62, where one of the adapter electrodes 62 is electrically connected to the electrode tab 21 of one of the battery cells 2, and another adapter electrode 62 is electrically connected to the electrode tab 21 of another battery cell 2; the electrode tabs 21 corresponding to the two adapter electrodes 62 have opposite polarities; and the sampling electrode 61 is electrically connected to respective electrode tabs 21 of the corresponding two battery cells 2, and the electrode tabs 21 of the corresponding two battery cells 2 electrically connected to the sampling electrode 61 have opposite polarities.

One of the at least two adapter electrodes 62 has a positive polarity, and another has a negative polarity. The battery 100 supplies power externally through two adapter electrodes 62, or charges the corresponding battery 100 through two adapter electrodes 62.

For example, the adapter electrode 62 may be a busbar tab.

The sampling electrode 61 is electrically connected to the electrode tabs 21 of the two battery cells 2, and the electrode tabs 21 of the corresponding two battery cells 2 electrically connected to the sampling electrode 61 have opposite polarities, so that the corresponding two battery cells 2 are connected in series through the sampling electrode 61. The voltage of the corresponding battery cell 2 can be measured through the sampling electrode 61 and any one adapter electrode 62.

For example, the sampling electrode 61 may be a busbar tab.

For example, referring to FIG. 1, one battery cell 2 may be provided on each of two sides of the temperature regulation container.

For example, referring to FIG. 4, two battery cells 2 may be provided on each of two sides of the temperature regulation container.

For example, referring to FIG. 4, FIG. 6, and FIG. 7, the two battery cells 2 on each side of the temperature regulation container may be connected in series. The two battery cells 2 on each side correspond to one sampling electrode 61 and two adapter electrodes 62.

In the embodiments of this disclosure, by connecting at least two battery cells 2 in the housing 5 in series through the sampling electrode 61, the two battery cells 2 connected in series supply power externally through two adapter electrodes 62 or the two battery cells 2 connected in series are charged through the two adapter electrodes 62. The voltage of the corresponding battery cell 2 can be measured through the sampling electrode 61 and any one of the two adapter electrodes 62, thereby monitoring the working state of each battery cell 2 in series in the battery 100.

It can be understood that the specific structure of the conductive terminal 6 is not limited. For example, the conductive terminal 6 may include at least two adapter electrodes 62, the conductive terminal 6 may not include the sampling electrode 61, and each adapter electrode 62 is electrically connected to the electrode tabs 21 of the corresponding two battery cells 2 having the same polarity, thereby connecting the corresponding two battery cells 2 in parallel.

In an embodiment, referring to FIG. 5 to FIG. 8, the housing 5 includes a main shell 53 and a top cover 54, where the pressure relief vent 52 is formed on one side of the main shell 53, the top cover 54 and the main shell 53 enclose the accommodation chamber 51, and the conductive terminal 6 is mounted on the top cover 54.

For example, referring to FIG. 5 to FIG. 8, the top cover 54 is located at one end of the main shell 53, and the pressure relief vent 52 is located on the other end of the main shell 53 opposite the top cover 54.

In the embodiments of this disclosure, before the top cover 54 is mounted on the housing, the conductive terminal 6 on the top cover 54 can be electrically connected to the electrode tab 21 of the battery cell 2, and then the connected top cover 54, conductive terminal 6, and battery cell 2 are mounted to the housing, which facilitates connection of the conductive terminal 6 and the battery cell 2 before they are placed into the housing.

In an embodiment, referring to FIG. 5 to FIG. 8, a material of the top cover 54 is plastic, and a material of the main shell 53 is metal or plastic; and the battery 100 further includes a flame-retardant cover 7 covering the pressure relief vent 52, where a material of the flame-retardant cover 7 is mica, and a pressure bearing capacity of the housing 5 is greater than a pressure bearing capacity of the flame-retardant cover 7.

By filling gas into the accommodation chamber 51 of the housing 5 to increase the pressure in the accommodation chamber 51, during the process of continuously increasing the pressure in the accommodation chamber 51, the flame-retardant cover 7 is damaged prior to the housing 5, that is, the pressure bearing capacity of the housing 5 is greater than the pressure bearing capacity of the flame-retardant cover 7.

For example, the flame-retardant cover is mica paper.

In the embodiments of this disclosure, the selection of different materials for the top cover 54, the main shell 53, and the flame-retardant cover 7 helps obtain the respective required pressure bearing capacities. The flame-retardant cover 7 is configured to block thermal runaway gas from adjacent batteries 100 from entering the accommodation chamber 51 of the housing 5, helping suppress thermal runaway propagation.

In an embodiment, referring to FIG. 1, FIG. 4, FIG. 5, and FIG. 7, the flame-retardant cover 7 is formed with a through hole 71, and the temperature regulation container runs through the through hole 71, so that the inlet 12 and the outlet of the temperature regulation container are exposed from the accommodation chamber 51 of the housing 5 along an end of the housing 5 facing the flame-retardant cover 7.

In the embodiments of this disclosure, the inlet 12 and the outlet of the temperature regulation container extend out of the accommodation chamber 51 through the through hole 71 of the flame-retardant cover 7. This facilitates the connection of the temperature regulation container to an external fluid source through the inlet 12 and the outlet, allowing the external fluid to enter the temperature regulation container through the inlet 12 and flow out through the outlet to regulate the temperature of the battery cell 2. The inlet 12 and the outlet of the temperature regulation container extend out of the accommodation chamber 51 through the through hole 71 of the flame-retardant cover 7, and the through hole 71 does not need to be sealed, which is beneficial for simplifying the structure of the battery 100.

In an embodiment, referring to FIG. 8, the top cover 54 has a flange 541 covering a sidewall of the main shell 53, where a gap between the flange 541 and the sidewall of the main shell 53 is less than or equal to 0.5 mm.

A gap is present between the flange 541 and the sidewall of the main shell 53, and the housing 5 is not fully sealed.

For example, the gap between the flange 541 and the sidewall of the main shell 53 may be 0.5 mm, 0.4 mm, 0.3 mm, 0.2 mm, or 0.1 mm.

For example, before the top cover 54 is installed into the main shell 53 and the top cover 54 is not yet connected to the main shell 53, the dimension between the flange 541 and the sidewall of the main shell 53 can be measured using a go/no-go gauge, a vernier caliper, or a micrometer.

For example, the span of the flange 541 of the top cover 54 and the corresponding span dimension of the main shell 53 may be separately measured using a vernier caliper, a micrometer, or the like, and half of the difference of the two values is the gap between the top cover 54 and the main shell 53.

For example, referring to FIG. 8, the gap between the flange 541 and the sidewall of the main shell 53 is D3, where D3 ≤ 0.5 mm.

In the embodiments of this disclosure, the flange 541 and the sidewall of the main shell 53 are not fully sealed, and a proper gap is present between the flange 541 and the sidewall of the main shell 53, resulting in a relatively high resistance for the thermal runaway gas to escape between the flange 541 and the sidewall of the main shell 53 is large. This can effectively suppress the thermal runaway gas from ejecting toward the top cover 54, and effectively guide the thermal runaway gas in the accommodation chamber to eject from the pressure relief vent 52, thereby helping reduce the degree of thermal runaway in the battery 100.

In an embodiment, referring to FIG. 2, the inlet 12 and the outlet are both located at a same end of the temperature regulation chamber 11, and the battery 100 further includes a first baffle 31 and a second baffle 32. The first baffle 31 is located in the temperature regulation chamber 11, the first baffle 31 is connected to a chamber wall of the temperature regulation chamber 11 on a side facing the inlet 12, the first baffle 31 is spaced apart from a chamber wall of the temperature regulation chamber 11 on a side facing away from the inlet 12, the first baffle 31 is provided in plurality, and the plurality of first baffles 31 are located between the outlet and the inlet 12 along an arrangement direction of the outlet and the inlet 12. The second baffle 32 is located in the temperature regulation chamber 11, where the second baffle 32 is spaced apart from the chamber wall of the temperature regulation chamber 11 on the side facing the inlet 12, the second baffle 32 is connected to the chamber wall of the temperature regulation chamber 11 on the side facing away from the inlet 12, and the second baffle 32 is located between a first baffle 31 closest to the outlet and a first baffle 31 closest to the inlet 12.

During the normal operation of the battery cell 2, an external fluid for temperature regulation enters the temperature regulation chamber 11 of the container body 14 from the inlet 12 and flows out of the temperature regulation chamber 11 from the outlet, and the fluid flowing through the temperature regulation chamber 11 performs heat exchange with the battery cell 2, thereby regulating the temperature of the normally working battery cell 2. The fluid flowing through the temperature regulation chamber 11 flows under the guidance of the first baffle 31 and the second baffle 32.

For example, referring to FIG. 2, the first baffle 31 and the second baffle 32 are both flat plates.

In the embodiments of this disclosure, the first baffle 31 is connected to the chamber wall of the temperature regulation chamber 11 on the side facing the inlet 12, the first baffle 31 is spaced apart from the chamber wall of the temperature regulation chamber 11 on the side facing away from the inlet 12, the first baffle 31 is provided in plurality, the plurality of first baffles 31 are located between the outlet and the inlet 12 along the arrangement direction of the outlet and the inlet 12, the second baffle 32 is spaced apart from the chamber wall of the temperature regulation chamber 11 on the side facing the inlet 12, the second baffle 32 is connected to the chamber wall of the temperature regulation chamber 11 on the side facing away from the inlet 12, and the second baffle 32 is located between the first baffle 31 closest to the outlet and the first baffle 31 closest to the inlet 12. This enables the fluid for temperature regulation in the temperature regulation chamber 11, under the guidance of the first baffle 31 and the second baffle 32, to flow back and forth between the target end and the other end of the container body 14 opposite the target end, and gradually flow toward the outlet. This increases the length of the flow path of the fluid in the temperature regulation chamber 11, and facilitates sufficient heat exchange between the fluid in the temperature regulation chamber 11 and the large surface 22 of the battery cell 2, enabling the temperature regulation container to effectively regulate the temperature of the battery cell 2 during normal operation.

In an embodiment, referring to FIG. 2 and FIG. 3, the battery 100 further includes a thermally decomposable solid substance 4 located in the temperature regulation chamber 11, where the thermally decomposable solid substance decomposes to produce gas at a temperature of higher than 100°C.

For example, the thermally decomposable solid substance 4 may be perfluorohexanone (FK-5-1-12), where perfluorohexanone is a fire extinguishing agent.

In the embodiments of this disclosure, when the battery cell 2 in the battery 100 experiences thermal runaway, the thermally decomposable solid substance 4 in the corresponding temperature regulation container in the battery 100 is heated and decomposes to produce gas, increasing the pressure in the temperature regulation chamber 11. This causes the temperature regulation container to opened at the position where the weakened region 142 is located, allowing the cooling fluid in the temperature regulation chamber 11 to flow out from the weakened region 142 to cool the battery cell 2. The temperature regulation container in the battery 100 experiencing thermal runaway, affected by the high temperature of the thermal runaway, causes the thermally decomposable solid substance 4 to decompose and produce gas, thereby opening the weakened region 142. However, the ambient temperature of the temperature regulation container in the battery 100 not experiencing thermal runaway does not rise excessively, and the thermally decomposable solid substance 4 in the temperature regulation container in the battery 100 not experiencing thermal runaway does not decompose, so the corresponding weakened region 142 is not opened. In this way, precise cooling is implemented for the battery 100 experiencing thermal runaway.

In an embodiment, referring to FIG. 1 to FIG. 9, the container wall 141 of the container body 14 has elasticity, and the container body 14 is capable of expanding and contracting under the action of the fluid in the temperature regulation chamber 11. By adjusting the pressure in the temperature regulation chamber 11, the average stress between the large surfaces 22 of the battery 100 can be substantially maintained between 0.1 MPa and 2 MPa. By changing the pressure in the temperature regulation chamber 11, the expansion space for the battery cell 2 in the battery 100 can be adjusted. The temperature regulation chamber 11 is provided with a thermally decomposable solid substance 4, and the thermally decomposable solid substance decomposes to produce gas at a temperature higher than 100°C. In the case of thermal runaway of the battery cell 2 in the battery 100, the corresponding temperature regulation container in the battery 100 is heated by the heat released from the thermal runaway of the battery cell 2, and the thermally decomposable solid substance 4 in the temperature regulation chamber 11 of the temperature regulation container is thermally decomposed to produce gas that presses against the weakened region 142, causing the temperature regulation container to open at the weakened region 142. The battery cells 2 are provided on two sides of the temperature regulation container. The container body 14 of the temperature regulation container may be an air bag. The battery cell 2 in the battery 100 may be a pouch battery cell or a hard-shell battery cell, where the hard-shell battery cell may be a prismatic hard-shell battery cell. The battery cell 2 may alternatively be another battery cell 2 having a large surface 22. The elastic container wall 141 covers, along the preset direction, an area of the bare cell 23 of the battery cell 2 that accounts for more than 50% of the projection area of the bare cell 23 along the preset direction. For the battery cells 2 on two sides of the temperature regulation container, one or two battery cells 2 may be provided on each side. Except for the inlet 12 and the outlet that can interact with an external fluid source, other parts of the temperature regulation chamber 11 of the temperature regulation container are substantially sealed. The external fluid source causes, using the inlet 12 and the outlet of the temperature regulation container, the fluid for temperature regulation to flow through the temperature regulation chamber 11 to adjust the pressure in the temperature regulation chamber 11. This enables the elastic container wall 141 to apply a required pressure relatively precisely to the large surface 22 of the battery cell 2. Moreover, the pressure applied by the elastic container wall 141 to the large surface 22 of the battery cell 2 is relatively uniform. The fluid for temperature regulation flowing into the temperature regulation chamber 11 through the inlet 12 may be liquid or gas. The inlet 12 and the outlet are located at the same end of the temperature regulation chamber 11, and the thinner weakened region 142 is provided at an end of the temperature regulation chamber 11 facing the inlet 12, where the thickness of the weakened region 142 is less than the thickness of a region of the container wall 141 other than the weakened region 142. The occurrence of thermal runaway in the battery cell 2 of the battery 100 can be detected by a pressure sensor or a gas sensor. In a case that the corresponding sensor detects thermal runaway in the battery cell 2 of the battery 100, gas is injected into the temperature regulation chamber 11 through an air inlet to increase the air pressure in the temperature regulation chamber 11. The weakened region 142 on the container wall 141 of the container body 14 is ruptured, and the fluid in the temperature regulation chamber 11 flows out from the ruptured weakened region 142 to rapidly cool the battery cell 2. The weakened region 142 may be provided on a side of the temperature regulation chamber 11 facing the large surface 22 of the battery cell 2 along the preset direction as appropriate, or may be provided at an end of the temperature regulation chamber 11 facing the inlet 12 as appropriate, a direction of the end of the temperature regulation chamber 11 facing the inlet 12 being perpendicular to the preset direction. In the case of thermal runaway in the battery 100, the thermally decomposable solid substance 4 is heated and decomposes to produce gas, causing the weakened region 142 of the corresponding temperature regulation container to rupture and release the pressure in the temperature regulation chamber 11. This sudden drop in pressure within the temperature regulation chamber 11 can be detected by a pressure sensor and used as a signal indicating the occurrence of thermal runaway in the corresponding battery 100.

The above embodiments are merely used to illustrate the technical solutions of this disclosure and are not intended to limit this disclosure. Although this disclosure has been described in detail with reference to the foregoing embodiments, persons of ordinary skill in the art should understand that: modifications can still be made to the technical solutions recorded in the foregoing embodiments, or equivalent replacements can be made to some or all of the technical features therein. Such modifications or replacements do not cause the essence of the corresponding technical solutions to depart from the scope of the technical solutions set forth in the embodiments of this disclosure, and they shall all be deemed to fall within the scope of this disclosure. In particular, provided that no structural conflicts exist, various technical features mentioned in the respective embodiments can be combined in any manner.

## Claims

1. A battery, comprising:
a temperature regulation container, having a temperature regulation chamber, and an inlet and an outlet each in communication with the temperature regulation chamber, wherein a weakened region is formed on a chamber wall of the temperature regulation chamber; and
a battery cell, wherein the temperature regulation container is provided with the battery cell on one side or two opposite sides along a preset direction, the preset direction intersecting a largest-area surface of the battery cell; and in a case that thermal runaway occurs in the battery cell, a pressure bearing capacity of the weakened region is less than a pressure bearing capacity of a region of the chamber wall of the temperature regulation chamber other than the weakened region, allowing fluid in the temperature regulation chamber to flow out from a position corresponding to the weakened region.

2. The battery according to claim 1, wherein the temperature regulation container comprises a container body, wherein a container wall of the container body encloses the temperature regulation chamber; the weakened region, the outlet, and the inlet are all formed on the container wall of the container body; the container body is provided with the battery cell on one side or two opposite sides along the preset direction; and in a case that thermal runaway occurs in the battery cell, the pressure bearing capacity of the weakened region is less than a pressure bearing capacity of a region of the container wall other than the weakened region, allowing the fluid in the temperature regulation chamber to flow out from the position corresponding to the weakened region.

3. The battery according to claim 2, wherein a thickness of the weakened region is less than a thickness of the region of the container wall other than the weakened region.

4. The battery according to claim 2 or 3, wherein the container wall of the container body has elasticity, and the container body is capable of expanding and contracting under the action of the fluid in the temperature regulation chamber.

5. The battery according to claim 4, wherein the container body is an air bag.

6. The battery according to claim 4 or 5, wherein a material of the container wall of the container body is rubber.

7. The battery according to any one of claims 4 to 6, wherein the preset direction is perpendicular to the largest-area surface of the battery cell; and projected along the preset direction, an overlapping region between a projection region of a bare cell of the battery cell and a projection region of the elastic container wall is a target region, and a ratio of an area of the target region to an area of the projection region of the bare cell in the battery cell is greater than or equal to 50% and less than or equal to 100%.

8. The battery according to any one of claims 1 to 7, wherein the temperature regulation container is provided with the weakened region on one side facing the corresponding battery cell along an arrangement direction of the temperature regulation container and the corresponding battery cell.

9. The battery according to any one of claims 1 to 8, wherein the inlet and the outlet are both located at a same end of the temperature regulation chamber, and the battery further comprises:
a first baffle located in the temperature regulation chamber, wherein the first baffle is connected to a chamber wall of the temperature regulation chamber on a side facing the inlet, the first baffle is spaced apart from a chamber wall of the temperature regulation chamber on a side facing away from the inlet, the first baffle is provided in plurality, and the plurality of first baffles are located between the outlet and the inlet along an arrangement direction of the outlet and the inlet; and
a second baffle located in the temperature regulation chamber, wherein the second baffle is spaced apart from the chamber wall of the temperature regulation chamber on the side facing the inlet, the second baffle is connected to the chamber wall of the temperature regulation chamber on the side facing away from the inlet, and the second baffle is located between a first baffle closest to the outlet and a first baffle closest to the inlet.

10. The battery according to any one of claims 1 to 9, wherein the battery further comprises a thermally decomposable solid substance located in the temperature regulation chamber, wherein the thermally decomposable solid substance decomposes to produce gas at a temperature of higher than 100°C.

11. The battery according to any one of claims 1 to 10, wherein the battery cell is a pouch battery cell.

12. The battery according to any one of claims 1 to 11, wherein the battery further comprises a housing and a conductive terminal mounted on the housing, wherein the battery cell and the temperature regulation container are both located within the housing, and the conductive terminal is electrically connected to an electrode tab of the battery cell.

13. The battery according to claim 12, wherein the inlet and the outlet are both located at an end of the housing facing away from the conductive terminal.

14. The battery according to claim 12 or 13, wherein the housing has an accommodation chamber and a pressure relief vent in communication with the accommodation chamber, wherein at least one battery cell is provided within the accommodation chamber, and the pressure relief vent and the conductive terminal are located on different sides of the housing.

15. The battery according to claim 14, wherein the conductive terminal comprises a sampling electrode and at least two adapter electrodes, wherein one of the adapter electrodes is electrically connected to an electrode tab of one battery cell, and another adapter electrode is electrically connected to an electrode tab of another battery cell; the electrode tabs corresponding to the two adapter electrodes have opposite polarities; and the sampling electrode is electrically connected to respective electrode tabs of the corresponding two battery cells, and the electrode tabs of the corresponding two battery cells electrically connected to the sampling electrode have opposite polarities.

16. The battery according to claim 14 or 15, wherein the housing comprises a main shell and a top cover, wherein the pressure relief vent is formed on one side of the main shell, the top cover and the main shell enclose the accommodation chamber, the conductive terminal is mounted on the top cover, a material of the top cover is plastic, and a material of the main shell is metal or plastic; and the battery further comprises a flame-retardant cover covering the pressure relief vent, wherein a material of the flame-retardant cover is mica, and a pressure bearing capacity of the housing is greater than a pressure bearing capacity of the flame-retardant cover.

17. A battery pack, comprising:
a box; and
the battery according to any one of claims 1 to 16, located in the box.

18. An electric apparatus, comprising:
an apparatus body; and
the battery pack according to claim 17, mounted on the apparatus body, wherein the battery pack is configured to supply power to the apparatus body.
